# NEUE EUROPÄISCHE PATENTSCHRIFT

(11) **EP 1 302 824 B2**
(45) Veröffentlichungstag und Bekanntmachung des Hinweises auf die Entscheidung über den Einspruch: **24.08.2011**
(45) Hinweis auf die Patenterteilung: 30.04.2008
(21) Anmeldenummer: 02022040.6
(22) Anmeldetag: 01.10.2002
(51) Int. Cl.: G05B 19/042, G05B 19/05

(54) **Digitale Ausgabebaugruppe, Automatisierungsgerät und dezentrales Automatisierungsgerät mit vorgebbaren Ausgabezuständen**
Digital output assembly, automation device and decentralised automation device with predefined output states
Ensemble de sortie digitale, appareil d'automatisation et appareil d'automatisation décentralisé comprenant des états de sortie prédéfinis

(30) Priorität: 01.10.2001 DE 20116109 U
(43) Veröffentlichungstag der Anmeldung: 16.04.2003
(73) Patentinhaber: SIEMENS AKTIENGESELLSCHAFT, 80333 München (DE)
(72) Erfinder: Gruenewald, Uwe, 90559 Burgthann (DE); Link, Adolf, 91074 Herzogenaurach (DE); Streichert, Gerhard, 92353 Postbauer-Heng (DE)

(56) Entgegenhaltungen:
- DE-A- 19 924 753
- GB-A- 2 004 088
- US-A- 5 170 339
- US-A- 5 497 315
- US-A- 5 993 039
- WALCZAK T A: "EMERGENCY PLC CONTROLLED SHUTDOWN" ADVANCES IN INSTRUMENTATION AND CONTROL, INSTRUMENT SOCIETY OF AMERICA, RESEARCH TRIANGLE PARK, US, Bd. 45, Nr. PART 4, 1990, Seiten 1711-1725, XP000172109 ISSN: 1054-0032

## Beschreibung

Die Erfindung betrifft eine digitale Ausgabebaugruppe mit einer Datenschnittstelle, sowie ein Automatisierungsgerät und ein dezentrales Automatisierungsgerät mit zumindest der digitalen Ausgabebaugruppe.

Digitale Ausgabebaugruppen werden benötigt, um z.B. in einer Fertigungs- oder Automatisierungsanlage Aktoren wie beispielsweise Motoren, Ventile, Pumpen oder Kompressoren anzusteuern. Häufig werden derartige digitale Ausgabebaugruppen z.B. in einem Steuergerät oder in einem Automatisierungsgerät untergebracht. Dabei werden die Ausgabebaugruppen und andere funktionale Baugruppen, wie z.B. analoge Eingabe-Baugruppen, Steuerrechner, Schnittstellen-Baugruppen, vorzugsweise als Einsteckkarten ausgeführt, welche in das Automatisierungsgerät eingesteckt werden können. Der modulare Aufbau ermöglicht dabei eine spätere Erweiterbarkeit des Automatisierungsgeräts sowie einen schnellen Austausch von fehlerhaften Baugruppen. Um die jeweilige elektrische Last der Aktoren schalten zu können, werden üblicherweise die Schaltausgänge von digitalen Ausgabebaugruppen an eine Frontplatte geführt. Dort können die Zuführungsleitungen der betreffenden Lasten z.B. an Klemmen aufgelegt werden oder mit einem Anschlussstecker aufgesteckt werden.

Alternativ werden in der Fertigungs- und Automatisierungstechnik auch dezentral verteilte Automatisierungsanlagen, wie z.B. das S7-Automatisierungssystem der Fa. Siemens, eingesetzt. Über eine Busverbindung, wie z.B. TCP/IP oder Profibus, können von einem Prozessrechner aus die dezentralen Automatisierungsgeräte angesprochen werden. Häufig verfügen derartige Automatisierungsgeräte neben Ein-/Ausgabe-Baugruppen auch über eine sog. Anschaltbaugruppe. Durch diese wird zum einen eine Buskommunikation zu einem Prozessrechner sowie eine Datenkommunikation zu den jeweiligen Ein-/Ausgabe-Baugruppen, wie beispielsweise der digitalen Ausgabebaugruppe, ermöglicht. Vorzugsweise werden die jeweiligen Baugruppen des dezentralen Automatisierungsgeräts als Module auf einer Hutschiene nebeneinander angeordnet.

Für eine sichere und potentialfreie Trennung zu den zu schaltenden Lasten werden in digitalen Ausgabebaugruppen überwiegend monostabile Schaltmittel, insbesondere Schaltrelais, eingesetzt. Diese sind für den jeweiligen Anwendungsfall und für die zu schaltenden Ströme und Spannungen der Last entsprechend ausgelegt.

In einem Fehlerfall der digitalen Ausgabebaugruppe oder des Automatisierungsgeräts oder auch bei einem Ausfall der Stromversorgung oder Bus- bzw. Datenkommunikation werden die Schaltrelais selbsttätig entregt, so dass alle angeschlossenen Lasten abgeschaltet werden.

In der US-A-5 993 039, zum Beispiel, ist ein Automatisierungsgerät, das seiner Ausgabebaugruppe in einen betriebssicheren Zustand bei einem Stromausfall treibt.

Dabei tritt das Problem auf, dass bei den o.g. Betriebszuständen ein Weiterbetrieb der daran angeschlossenen Lasten nicht mehr möglich ist. So wäre es für einen Ausfall- oder Notfallbetrieb beispielsweise wünschenswert, nur einen Teil von verfügbaren Druckluftkompressoren, welche im Verbund in eine gemeinsame Druckluftanlage speisen, zuzuschalten.

Auch bleiben die Schaltrelais bei der Inbetriebnahme, d.h. beim Zuschalten der Versorgungsspannung des Automatisierungsgerät aus Sicherheitsgründen vorerst entregt. Erst bei Vorliegen eines gültigen Ausgabezustands wird dieser an die Schaltrelais ausgegeben. Dieser gültige Ausgabezustand wird vom übergeordneten Steuerrechner oder vom Prozessrechner aber erst nach einem ordnungsgemäßen Hochfahren und Testen der Systemkomponenten und der Datenkommunikation übertragen

Dabei tritt das weitere Problem auf, dass bei Inbetriebnahme eines Automatisierungssystems viel Zeit durch das Hochfahren und Testen der Systemkomponenten und der Datenkommunikationseinrichtungen vergeht. Je nach Komplexität des Automatisierungssystem kann dieser Hochfahr- oder Startvorgang im Minutenbereich liegen.

Der Erfindung liegt somit die Aufgabe zugrunde, eine digitale Ausgabebaugruppe, ein Automatisierungsgerät und ein dezentrales Automatisierungsgerät anzugeben, welche für die o.g. Betriebszustände vorgebbare Ausgabezustände ermöglicht.

Die Erfindung wird gelöst mit der digitale Ausgabebaugruppe nach Anspruch 1. In den Unteransprüchen sind vorteilhaft weitere Ausführungsformen der digitalen Ausgabebaugruppe sowie ein Automatisierungsgerät und ein dezentrales Automatisierungsgerät mit der digitalen Ausgabebaugruppe enthalten.

Die erfindungsgemäße digitale Ausgabebaugruppe mit einer Datenschnittstelle weist mindestens ein Schaltmittel und eine Verarbeitungseinheit auf. Die Verarbeitungseinheit gibt aus einen vorgebbaren Anlaufzustand bei Nichtvorliegen einer Datenkommunikation an der Datenschnittstelle an ein Schaltmittel, einen Arbeitszustand an ein Schaltmittel, welcher an der Datenschnittstelle empfangen wurde und einen vorgebbaren Ausfallzustand bei Abbruch der Datenkommunikation an ein Schaltmittel.

In einer vorteilhaften Ausgestaltung der digitalen Ausgabebaugruppe ist als Schaltmittel ein zusätzlich ansteuerbares bistabiles Schaltelement einsetzbar, welches einen vorgebbaren Notfallzustand bei einem Ausfall der Stromversorgung ausgibt.

Die Erfindung wird an Hand der nachfolgenden Figuren näher erläutert. Dabei zeigt
- FIG 1 :: ein Automatisierungsgerät mit einer digitalen Ausgabebaugruppe gemäß der Erfindung, welche als Einsteckbaugruppe für das Automatisierungsgerät ausgebildet ist,
- FIG 2 :: einen beispielhaften Aufbau der digitalen Ausgabebaugruppe mit einer Verarbeitungseinheit an einer Datenschnittstelle und ansteuerbare Schaltmittel,
- FIG 3 :: einen beispielhaften Aufbau der Verarbeitungseinheit gemäß der Erfindung, und
- FIG 4 :: ein erfindungsgemäßes Schaltmittel mit einem monostabilen und einem zusätzlichen bistabilen Schaltelement.

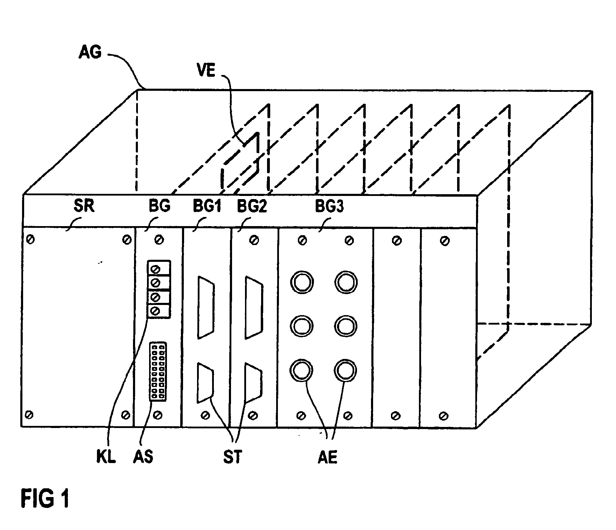

Dabei zeigt FIG 1 ein Automatisierungsgerät AG mit einer digitalen Ausgabebaugruppe BG gemäß der Erfindung, welche als Einsteckbaugruppe für das Automatisierungsgerät AG ausgebildet ist. An der Frontseite weist die digitale Ausgabebaugruppe BG eine beispielhafte Klemme KL sowie eine Anschlussbuchse AS zum Anschluss der zu schaltenden Lasten auf. Weiterhin ist in strichlierter Darstellung eine Verarbeitungseinheit VE, wie z.B. ein Mikrocontroller, zur Steuerung und Überwachung der digitalen Ausgabebaugruppe BG gemäß der Erfindung ersichtlich. Darüber hinaus sind weitere elektronische Baugruppen BG1-BG3, wie zwei Schnittstellen-Baugruppen BG1,BG2 und eine Anzeige-Einsteckkarte BG3 vorhanden. Mittels der Schnittstellen-Baugruppen BG1,BG2 können z.B. weitere Steuergeräte angesprochen werden oder interne Betriebsdaten des Automatisierungsgeräts AG ausgelesen werden. Die Anzeige-Einsteckkarte BG3 verfügt im Beispiel der Figur über optische Anzeigeelementen AE für Warn- oder Fehlermeldungen. Weiterhin ist ein Steuerrechner SR zu sehen, welcher üblicherweise über eine Rückwandbusplatine zur datentechnischen Kommunikation mit den anderen elektronischen Baugruppen verbunden ist.

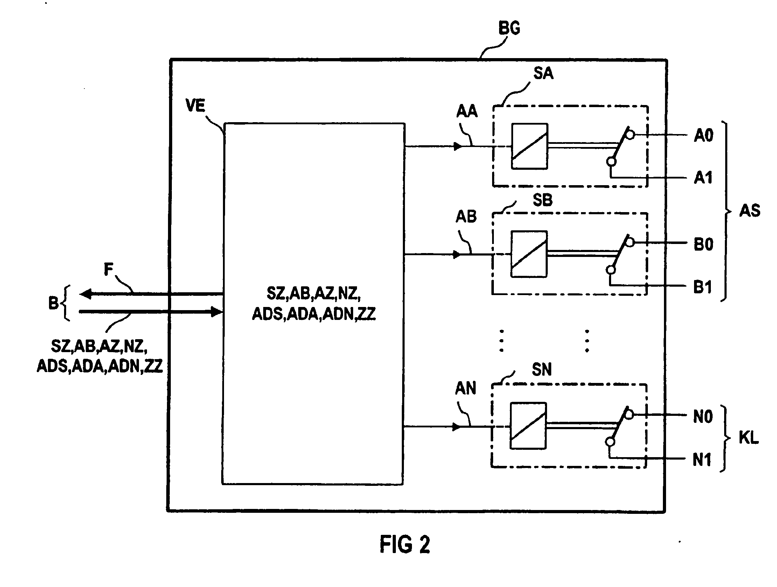

FIG 2 zeigt einen beispielhaften Aufbau der digitalen Ausgabebaugruppe BG mit einer Verarbeitungseinheit VE an einer Datenschnittstelle B und ansteuerbare Schaltmittel SA,SB,SN. Über die Datenschnittstelle B kann die Verarbeitungseinheit VE bei Vorliegen einer Datenkommunikation Daten empfangen sowie Daten an diese senden. Weiterhin ist die Verarbeitungseinheit VE mittels der Ansteuerleitungen AA,AB,AN mit den Schaltmittel SA,SB,SN verbunden. Dazu kann die Verarbeitungseinheit VE vorteilhaft über entsprechende Ausgangsstufen oder über einen angeschlossenen Treiberbaustein verfügen, welcher einen ausreichenden Schaltstrom für das Schaltmittel SA,SB,SN bereitstellen kann. Im Beispiel der FIG 2 sind als Schaltmittel SA,SB,SN monostabile Schaltrelais RL mit jeweils einer Ansteuerspule und einem Schaltkontakt an einem Ausgang A0,A1,AN,B0,B1,BN erkennbar. Alternativ können als Schaltmittel SA,SB,SN auch elektronische Schaltmittel mit einem potentialfreien Ausgang, wie z.B. ein Halbleiterrelais, oder auch bistabile Schaltrelais eingesetzt werden. Die Schaltkontakte sind an eine nicht weiter dargestellte Klemme KL oder an eine Anschlussbuchse AS zum Auflegen der Zuführungsleitungen der Last geführt.

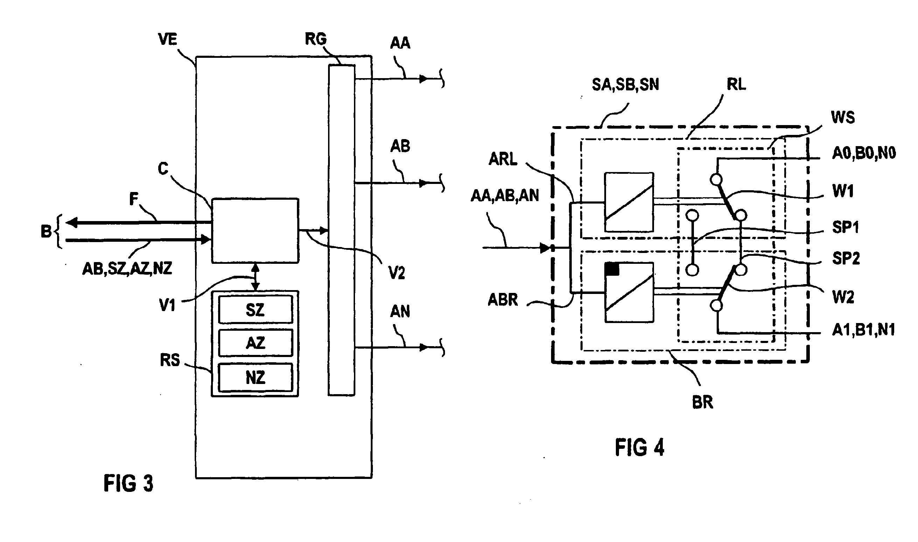

Erfindungsgemäß kann die Verarbeitungseinheit VE über die Datenschnittstelle B vorgebbare Betriebszustände SZ,AB,AZ,NZ empfangen. Dies sind insbesondere ein Startzustand SZ, ein Arbeitszustand AB, ein Ausfallzustand AZ sowie ein Notfallzustand NZ. Weiterhin können diese Betriebszustände gemäß der Erfindung in einem nichtflüchtigen Speicher in der Verarbeitungseinheit VE hinterlegt werden. Alternativ dazu kann auch ein mit der Verarbeitungseinheit VE verbundener externer nichtflüchtiger Speicher verwendet werden. Dies wird im Beispiel der FIG 3 noch eingehender beschrieben.

Damit ist der Vorteil verbunden, dass mit Zuschalten der Stromversorgung die Verarbeitungseinheit VE sofort einen betriebssicheren Startzustand SZ ausgeben kann. Dadurch kann z.B. ein Teil von verfügbaren Lasten, wie z.B. Pumpen oder Kompressoren, bereits mit einem Füllvorgang beginnen. Somit kann z.B. auch vorteilhaft verhindert werden, dass ein Fertigungsprozess unterbrochen werden muss, weil der Luftvorrat für die pneumatischen Aktoren aufgebraucht ist.

Weiterhin kann die Verarbeitungseinheit VE einen Ausfallzustand AZ bei Abbruch der Datenkommunikation ausgeben. Dadurch kann vorteilhaft z.B. in einem zeitlich begrenzten Umfang ein Teil der verfügbaren Aktoren weiterbetrieben werden, bis wieder ein neuer, wie z.B. ein zyklisch gesendeter gültiger Arbeitszustand AB vorliegt. Die Verarbeitungseinheit VE kann diesen Ausfallzustand AZ beispielsweise auch erst dann ausgeben, wenn innerhalb einer vorgebbaren Zykluszeit ZZ kein weiterer gültiger Arbeitszustand AB empfangen wurde. Nach Ablauf dieser Zykluszeit ZZ wird dann ein Ausfall der Datenkommunikation angenommen.

Ebenso kann die Verarbeitungseinheit VE einen Notfallzustand NZ bei Ausfall der Stromversorgung, z.B. bei Ausfall eines Teils des Automatisierungssystems ausgeben. Dies ist insbesondere dann vorteilhaft, wenn gemäß der Erfindung die digitale Ausgabebaugruppe BG über eine interne Pufferbatterie zur zeitlichen Aufrechterhaltung der Stromversorgung für die Schaltmittel SA,SB,SN aufweist. Dadurch kann vorteilhaft über einen begrenzten Zeitraum z.B. ein Notbetrieb zur Sicherstellung von notwendigen Grundfunktionen eines Automatisierungssystem eingestellt werden.

Weiterhin kann gemäß der Erfindung der jeweilige Startzustand SZ, Ausfallzustand AZ oder Notfallzustand NZ aus Gründen der Betriebsicherheit nur für eine bestimmte Ausgabedauer ADS,ADA, ADN ausgegeben werden. Dadurch kann z.B. vorteilhaft sichergestellt werden, dass die Druckluftbehälter der beispielhaften Druckluftanlage keine unzulässigen Fülldrücke durch rechtzeitige Abschaltung der Kompressoren annehmen können.

Darüber hinaus kann die Verarbeitungseinheit VE gemäß der Erfindung in einem Fehlerfall eine Fehlermeldung F an die Datenschnittstelle B ausgeben. So ist es vorteilhaft möglich, z.B. im Rahmen einer Selbstdiagnose oder bei fehlerhaften Quittierungssignalen der Schaltmittel SA,SB,SN, einen Fehlercode F an den übergeordneten Steuerrechner SR zu senden. Zugleich kann gemäß der Erfindung der Notfallzustand NZ ausgegeben werden oder auch alle Schaltmittel SA,SB,SN ausgeschaltet werden.

FIG 3 zeigt weiterhin einen beispielhaften Aufbau der Verarbeitungseinheit VE gemäß der Erfindung. Dabei weist diese im Beispiel der Figur einen Controller C, einen nichtflüchtigen Speicher RS sowie ein Ausgaberegister RG auf. Der Controller C erfüllt hierzu die Aufgabe eines Datenrangierers. Zum einen ermöglicht er den Datentransfer des vorgebbaren Start-, Ausfall- und Notfallzustand SZ,AZ,NZ in den nichtflüchtigen Speicher RS mittels einer Verbindungsleitung V1. Bei Vorliegen eines gültigen Arbeitszüstands AB wird dieser direkt zu dem Ausgaberegister RS weitergeleitet. Das Ausgaberegister RG kann z.B. eine Flip-Flop-Schaltung mit nachgeschalteter Treiberstufe sein. In einem fehlerhaften Betriebszustand oder bei Inbetriebnahme der digitalen Ausgabebaugruppe BG werden die entsprechenden Ausgabezustände SZ,AZ,NZ aus dem nichtflüchtigen Speicher RS ausgelesen und an das Ausgaberegister RG mittels der Verbindungsleitung V2 weitergeleitet. Der nichtflüchtige Speicher RS kann dabei z.B. eine EEPROM- oder eine FRAM-Speichereinheit sein. Bei Auftritt eines internen Fehlers der digitalen Ausgabebaugruppe BG kann zudem ein zugehöriger Fehlercode als Fehlermeldung F von der Verarbeitungseinheit VE an die Datenschnittstelle B gesendet werden.

FIG 4 zeigt ein erfindungsgemäßes Schaltmittel SA,SB,SN mit einem monostabilen und einem zusätzlichen bistabilen Schaltelement RL,BR für eine bevorzugte Ausführungsform. Dabei kann für das monostabile Schaltelement RL z.B. ein Schaltrelais oder ein Halbleiterrelais mit einem oder mit mehreren potentialfreien Ausgängen eingesetzt werden. Beide Schaltelemente RL fallen bei fehlender elektrischer Speisung über die Ansteuerleitung ARL selbsttätig in einen sicheren Schaltzustand SP2 gemäß dem Beispiel der Figur zurück.

Weiterhin ist es gemäß der Erfindung vorteilhaft, für das bistabile Schaltelement BR ein bistabiles Schaltrelais BR zu verwenden. Derartige Schaltrelais benötigen zum Wechseln und zum dortigen Verharren in der jeweiligen anderen Schaltposition SP1,SP2 lediglich einen kurzzeitigen Stromimpuls. Die gewünschte Schaltposition SP1,SP2 lässt sich dabei entsprechend der gewählten Polarität des Stromimpulses einstellen. Alternativ verfügen bistabile Schaltrelais auch über getrennt ansteuerbare Erregerspulen für die jeweilige Schaltposition SP1,SP2. Die Ansteuerung kann dabei mittels der Ansteuerleitung ABR erfolgen. Für das Beispiel der Figur kann es auch vorteilhaft sein, im Knotenpunkt der Ansteuerleitungen ARL,ABR eine nicht weiter dargestellte Ansteuerschaltung einzusetzen, welche die entsprechenden Schaltströme und Schaltimpulse für das monostabile und das bistabile Schaltrelais RL,BR erzeugt.

Erfindungsgemäß werden die beiden o.g. Schaltrelais RL,BR ausgangsseitig in einer Wechselschaltung WS betrieben, welche an den Ausgängen A0,B0,N0,A1,B1,N1 eine angeschlossene Last schalten kann. Dazu verfügt jedes Schaltrelais RL,BR zumindest über einen Wechselkontakt W1,W2 oder in geeigneter Weise verschaltete Öffner und Schließer.

Damit ist der Vorteil verbunden, dass bei einem Ausfall der Stromversorgung nun die eingestellte Schaltposition SP1,SP2 des bistabilen Schaltrelais BR den Schaltzustand der Last für den Notfallzustand NZ bestimmt. Für die Verarbeitungseinheit VE ist dabei zu beachten, dass für das Schalten der Last, entsprechend dem Beispiel in der Figur, eine gleiche Schaltposition SP1,SP2 für beide Schaltrelais RL,BR notwendig ist. Für das Ausschalten der Last sind folglich komplementäre Schaltpositionen SP1,SP2 anzusteuern.

Weiterhin kann gemäß der Erfindung das zusätzliche bistabile Schaltelement BR für einen Wechsel der Schaltposition SP1,SP2 nur in einem strom- und spannungslosen Zustand der Last angesteuert werden. Weiterhin kann erfindungsgemäß das bistabile Schaltrelais BR für einen Nennstrom der zu schaltenden Last ausgelegt werden.

Dadurch ist es vorteilhaft möglich, dass für das zusätzliche bistabile Schaltelement BR, bzw. für das bistabile Schaltrelais BR eine kompaktere Bauart mit geringeren Schaltungsanforderungen gewählt werden kann. Dies ist deshalb möglich, da diese i.Vgl. zu den monostabilen Schaltrelais RL keine trennenden und einschaltenden Schaltvorgänge mit verschleißender Lichtbogenbildung beherrschen müssen.

Gemäß der Erfindung können eine oder mehrere digitale Ausgabebaugruppen BG auch in einem Automatisierungsgerät AG untergebracht sein, welche über die Datenschnittstelle B mit einem gleichfalls untergebrachten Steuerrechner SR verbunden sind. Mit einem solchen Automatisierungsgerät AG ist es z.B. möglich, eine Anlage, wie z.B. von Kompressoren in einem Verbund, zu steuern.

Damit ist der Vorteil verbunden, dass zur Erreichung möglichst geringer Standzeiten der Anlage vorgebbare Ausgabezuständen SZ,AZ,NZ in Fehlerfällen oder bei Inbetriebnahme ausgegeben werden können.

Weiterhin kann erfindungsgemäß ein dezentrales Ausgabegerät eine oder mehrere digitale Ausgabebaugruppen BG aufweisen. Die digitale Ausgabebaugruppe BG kann dabei als Modul zur Befestigung an einer Hutschiene ausgebildet werden. Dieses Modul kann dann mit anderen modularen Funktionsbaugruppen nebeneinander mit dem Steuerrechner SR, insbesondere mit einer dezentralen Anschaltbaugruppe, an der Hutschiene befestigt werden. Dabei ist der Steuerrechner SR mit der Datenschnittstelle B mit den jeweilige Modulen verbunden.

Damit ist der weitere Vorteil verbunden, dass für größere Fertigungs- und Automatisierungsanlagen mit dezentralen Automatisierungstechniken die o.g. Vorteile der erfindungsgemäßen digitalen Ausgabebaugruppe BG in Fehlerfällen und bei einer Inbetriebnahme zur Minimierung von Standzeiten genutzt werden können.

## Patentansprüche

1. Digitale Ausgabebaugruppe (BG) mit einer Datenschnittstelle (B), welche zumindest aufweist,
a) mindestens ein Schaltmittel (SA,SB,SN), und
b) eine Verarbeitungseinheit (VE), welche
b1) einen vorgebbaren Anlaufzustand (SZ) bei Nichtvorliegen einer Datenkommunikation an der Datenschnittstelle (B) an ein Schaltmittel (SA,SB,SN) ausgibt,
b2) einen Arbeitszustand (AB) an ein Schaltmittel (SA,SB,SN) ausgibt, welcher an der Datenschnittstelle (B) empfangen wurde, und
b3) einen vorgebbaren Ausfallzustand (AZ) bei Abbruch der Datenkommunikation an ein Schaltmittel (SA,SB,SN) ausgibt,
wobei die Verarbeitungseinheit (VE) über die Datenschnittstelle (B) die vorgebbaren Betriebszustände (SZ,AB,AZ,NZ) empfangen kann.

2. Digitale Ausgabebaugruppe (BG) nach Anspruch 1, wobei der von der Verarbeitungseinheit (VE) ausgebbare Ausfallzustand (AZ) und/oder Arbeitszustand (AB) in einem nichtflüchtigen Speicher (RS) hinterlegbar ist.

3. Digitale Ausgabebaugruppe (BG) nach Anspruch 1 oder 2, wobei als Schaltmittel (SA,SB,SN) ein monostabiles Schaltmittel (RL) einsetzbar ist.

4. Digitale Ausgabebaugruppe (BG) nach Anspruch 3, wobei als monostabiles Schaltmittel (SA,SB,SN) ein Schaltrelais (RL) einsetzbar ist.

5. Digitale Ausgabebaugruppe (BG) nach Anspruch 3, wobei als Schaltmittel (SA,SB,SN) ein elektronisches Schaltelement mit insbesondere einem potentialfreien Ausgang einsetzbar ist.

6. Digitale Ausgabebaugruppe (BG) nach einem der vorangegangenen Ansprüche 1 oder 2, wobei als Schaltmittel (SA,SB,SN) ein bistabiles Schaltrelais (BR) einsetzbar ist.

7. Digitale Ausgabebaugruppe (BG) nach einem der vorangegangenen Ansprüche, welche eine Pufferbatterie zur Aufrechterhaltung der Stromversorgung aufweist.

8. Digitale Ausgabebaugruppe (BG) nach einem der vorangegangenen Ansprüche, wobei die Ausgabedauer (ADS,ADA) des Startzustand SZ und/oder des Ausfallzustands (AZ) einstellbar ist.

9. Digitale Ausgabebaugruppe (BG) nach einem der vorangegangenen Ansprüche 1 bis 5, wobei als Schaltmittel (SA,SB,SN) ein zusätzlich ansteuerbares bistabiles Schaltelement (BR) einsetzbar ist, welches einen vorgebbaren Notfallzustand (NZ) bei einem Ausfall der Stromversorgung ausgibt.

10. Digitale Ausgabebaugruppe (BG) nach Anspruch 9, wobei das zusätzlich ansteuerbare bistabile Schaltelement (BR) mit dem monostabilen Schaltelement (RL) ausgangsseitig eine Wechselschaltung (WS) zum Schalten der Last bildet.

11. Digitale Ausgabebaugruppe (BG) nach Anspruch 10, wobei das monostabiles Schaltelement (RL) ein Schaltrelais ist.

12. Digitale Ausgabebaugruppe (BG) nach Anspruch 10 oder 11, wobei das zusätzliche bistabile Schaltelement (BR) ein bistabiles Schaltrelais ist.

13. Digitale Ausgabebaugruppe (BG) nach einem der vorangegangenen Ansprüche 9 bis 12, wobei die Verarbeitungseinheit (VE) eine der beiden Schaltpositionen (SP1,SP2) des zusätzlichen bistabilen Schaltelements (BR) für den Notfallzustand (NZ) ansteuert.

14. Digitale Ausgabebaugruppe (BG) nach Anspruch 13, wobei das zusätzliche bistabile Schaltelement (BR) für einen Wechsel der Schaltposition (SP1,SP2) nur in einem strom- und spannungslosen Zustand der Last ansteuerbar ist.

15. Digitale Ausgabebaugruppe (BG) nach Anspruch 14, wobei das zusätzliche bistabile Schaltelement (BR) für einen Nennstrom der zu schaltenden Last und für Schaltvorgänge im strom- und spannungslosen Zustand der Last ausgelegt ist.

16. Digitale Ausgabebaugruppe (BG) nach einem der vorangegangenen Ansprüche 13 bis 15, wobei der von Verarbeitungseinheit (VE) festlegbare Notfallzustand (NZ) in dem nichtflüchtigen Speicher (RS) hinterlegbar ist.

17. Digitale Ausgabebaugruppe (BG) nach einem der vorangegangenen Ansprüche, wobei die Verarbeitungseinheit (VE) Mittel zur Überwachung der Schaltmittel (SA,SB,SN) für einen Fehlerfall und Mittel zur Ausgabe einer zugehörigen Fehlermeldung (F) an die Datenschnittstelle (B) aufweist.

18. Digitale Ausgabebaugruppe (BG) nach Anspruch 17, wobei im Fehlerfall der Notfallzustand (NZ) ausgegeben wird.

19. Digitale Ausgabebaugruppe (BG) nach einem der vorangegangenen Ansprüche 9 bis 18, wobei die Ausgabedauer (ADN) des Notfallzustands (NZ) einstellbar ist.

20. Automatisierungsgerät (AG) mit zumindest einer digitalen Ausgabebaugruppe (BG) nach einem der vorangegangenen Ansprüche und mit einem Steuerrechner (SR) an der Datenschnittstelle (B).

21. Dezentrales Ausgabegerät mit zumindest einer digitalen Ausgabebaugruppe (BG) nach einem der vorangegangenen Ansprüche und mit einem Steuerrechner (SR), insbesondere mit einer dezentralen Anschaltbaugruppe, welche an einer Hutschiene befestigbar sind, wobei der Steuerrechner (SR) mit der Datenschnittstelle (B) verbindbar ist.

## Claims

1. Digital output assembly (BG) with a data interface (B), with at least the following features,
a) at least one switching means (SA, SB, SN), and
b) a processing unit (VE), which
b1) outputs a predefined start-up state (SZ), in the absence of a data communication at the data interface (B), to a switching means (SA, SB, SN),
b2) outputs a working state (AB) which was received at the data interface (B) to a switching means (SA, SB, SN), and
b3) outputs a predefined failure state (AZ) to a switching means (SA, SB, SN) if data communication is interrupted,
with the processing unit (VE) being able to receive the predefined operating states (SZ, AB, AZ, NZ) via the data interface (B).

2. Digital output assembly (BG) according to claim 1, with the failure state (AZ) and/or working state (AB) able to be output by the processing unit (VE) being able to be stored in a non-volatile memory (RS).

3. Digital output assembly (BG) according to claim 1 or 2, with a monostable switching means (RL) able to be used as the switching means (SA, SB, SN).

4. Digital output assembly (BG) according to claim 3, with a switching relay (RL) able to be used as the monostable switching means (SA, SB, SN).

5. Digital output assembly (BG) according to claim 3, with an electronic switching element with especially one floating output able to be used as the switching means (SA, SB, SN).

6. Digital output assembly (BG) according to one of the preceding claims 1 or 2, with a bistable switching relay (BR) able to be used as the switching means (SA, SB, SN).

7. Digital output assembly (BG) according to one of the preceding claims, which features a backup battery for maintaining the power supply.

8. Digital output assembly (BG) according to one of the preceding claims, with the output duration (ADS, ADA) of the start-up state SZ and/or of the failure state (AZ) able to be set.

9. Digital output assembly (BG) according to one of the preceding claims 1 to 5, with an additional controllable bistable switching element (BR) able to be used as a switching means (SA, SB, SN), which outputs a predefined emergency state (NZ).

10. Digital output assembly (BG) according to claim 9, with the additional controllable bistable switching element (BR) forming a two-way circuit (WS) with the monostable switching element (RL) on the output side for switching the load.

11. Digital output assembly (BG) according to claim 10, with the monostable switching element (RL) being a switching relay.

12. Digital output assembly (BG) according to claim 10 or 11, with the additional bistable switching element (BR) being a bistable switching relay.

13. Digital output assembly (BG) according to one of the preceding claims 9 to 12, with the processing unit (VE) activating one of the two switching positions (SP1, SP2) of the additional bistable switching element (BR) for the emergency state (NZ).

14. Digital output assembly (BG) according to claim 13, with the additional bistable switching element (BR) able to be activated for a change of switching position (SP1, SP2) only in a current- and voltage-free state of the load.

15. Digital output assembly (BG) according to claim 14, with the additional bistable switching element (BR) being designed for a rated current of the load to be switched and for switching processes in the current- and voltage-free state of the load.

16. Digital output assembly (BG) according to one of the preceding claims 13 to 15, with the emergency state (NZ) definable by the processing unit (VE) able to be stored in the non-volatile memory (RS).

17. Digital output assembly (BG) according to one of the preceding claims, with the processing unit (VE) featuring means for monitoring the switching means (SA, SB, SN) for an error and means for outputting associated error messages (F) to the data interface (B).

18. Digital output assembly (BG) according to claim 17, with the emergency state (NZ) being output in the event of an error.

19. Digital output assembly (BG) according to one of the preceding claims 9 to 18, with the output duration (ADN) of the emergency state (NZ) able to be set.

20. Automation device (AG) with at least one digital output assembly (BG) according to one of the preceding claims and with a control processor (SR) at the data interface (B).

21. Decentralised output device with at least one digital output assembly (BG) according to one of the preceding claims and with a control processor (SR), especially with a local interface assembly, which can be attached to a top-hat rail, with the control processor (SR) able to be connected to the data interface (B).

## Revendications

1. Module de sortie numérique (BG) avec une interface de données (B), lequel comporte au moins :
a) au moins un moyen de commutation (SA, SB, SN), et
b) une unité de traitement (VE) qui
b1) fournit à un moyen de commutation (SA, SB, SN), en l'absence d'une communication de données sur l'interface de données (B), un état de démarrage (SZ) pouvant être prescrit,
b2) fournit à un moyen de commutation (SA, SB, SN) un état de travail (AB) qui a été reçu à l'interface de données (B), et
b3) fournit à un moyen de commutation (SA, SB, SN), en cas d'interruption de la communication de données, un état de panne (AZ) pouvant être prescrit,
l'unité de traitement (VE) pouvant recevoir les états de fonctionnement (SZ, AB, AZ, NZ) pouvant être prescrits par l'interface de données (B).

2. Module de sortie numérique (BG) selon la revendication 1, dans lequel l'état de panne (AZ) et/ou l'état de travail (AB) pouvant être fourni par l'unité de traitement (VE) peuvent être enregistrés dans une mémoire non volatile (RS).

3. Module de sortie numérique (BG) selon la revendication 1 ou 2, dans lequel un moyen de commutation monostable (RL) peut être utilisé comme moyen de commutation (SA, SB, SN).

4. Module de sortie numérique (BG) selon la revendication 3, dans lequel un relais de commutation (RL) peut être utilisé comme moyen de commutation monostable (SA, SB, SN).

5. Module de sortie numérique (BG) selon la revendication 3, dans lequel un élément de commutation électronique avec notamment une sortie sans potentiel peut être utilisé comme moyen de commutation (SA, SB, SN).

6. Module de sortie numérique (BG) selon l'une des revendications précédentes 1 ou 2, dans lequel un relais de commutation bistable (BR) peut être utilisé comme moyen de commutation (SA, SB, SN).

7. Module de sortie numérique (BG) selon l'une des revendications précédentes, qui comporte une batterie tampon pour le maintien de l'alimentation en courant.

8. Module de sortie numérique (BG) selon l'une des revendications précédentes, dans lequel la durée de sortie (ADS, ADA) de l'état de démarrage (SZ) et/ou de l'état de panne (AZ) est réglable.

9. Module de sortie numérique (BG) selon l'une des revendications précédentes 1 à 5, dans lequel un élément de commutation bistable (BR) qui est commandable en plus et qui fournit un état de cas d'urgence (NZ) en cas de panne de l'alimentation en courant peut être utilisé comme moyen de commutation (SA, SB, SN).

10. Module de sortie numérique (BG) selon la revendication 9, dans lequel l'élément de commutation bistable (BR) commandable en plus forme avec l'élément de commutation monostable (RL), côté sortie, un commutateur inverseur (WS) pour la commutation de la charge.

11. Module de sortie numérique (BG) selon la revendication 10, dans lequel l'élément de commutation monostable (RL) est un relais de commutation.

12. Module de sortie numérique (BG) selon la revendication 10 ou 11, dans lequel l'élément de commutation bistable supplémentaire (BR) est un relais de commutation bistable.

13. Module de sortie numérique (BG) selon l'une des revendications précédentes 9 à 12, dans lequel l'unité de traitement (VE) commande l'une des deux positions de commutation (SP1, SP2) de l'élément de commutation bistable supplémentaire (BR) pour l'état de cas d'urgence (NZ).

14. Module de sortie numérique (BG) selon la revendication 13, dans lequel l'élément de commutation bistable supplémentaire (BR) pour un basculement de la position de commutation (SP1, SP2) n'est commandable que si la charge est dans un état sans courant et sans tension.

15. Module de sortie numérique (BG) selon la revendication 14, dans lequel l'élément de commutation bistable supplémentaire (BR) est conçu pour un courant nominal de la charge à commuter et pour des opérations de commutation lorsque la charge est dans un état sans courant et sans tension.

16. Module de sortie numérique (BG) selon l'une des revendications précédentes 13 à 15, dans lequel l'état de cas d'urgence (NZ) pouvant être déterminé par l'unité de traitement (VE) peut être enregistré dans la mémoire non volatile (RS).

17. Module de sortie numérique (BG) selon l'une des revendications précédentes, dans lequel l'unité de traitement (VE) comporte des moyens pour la surveillance des moyens de commutation (SA, SB, SN) pour un cas d'erreur et des moyens pour la fourniture d'un message d'erreur associé (F) à l'interface de données (B).

18. Module de sortie numérique (BG) selon la revendication 17, dans lequel l'état de cas d'urgence (NZ) est fourni en sortie en cas d'erreur.

19. Module de sortie numérique (BG) selon l'une des revendications précédentes 9 à 18, dans lequel la durée de sortie (ADN) de l'état de cas d'urgence (NZ) est réglable.

20. Appareil d'automatisation (AG) avec au moins un module de sortie numérique (BG) selon l'une des revendications précédentes et avec un ordinateur de commande (SR) branché sur l'interface de données (B).

21. Appareil de sortie décentralisé avec au moins un module de sortie numérique (BG) selon l'une des revendications précédentes et avec un ordinateur de commande (SR), notamment avec un module de connexion décentralisé, qui peut être fixé à un profilé chapeau, l'ordinateur de commande (SR) pouvant être relié à l'interface de données (B).
